# EUROPEAN PATENT APPLICATION

(11) **EP 0 636 780 A1**
(43) Date of publication of application: **01.02.1995**
(21) Application number: 94304367.9
(22) Date of filing: 16.06.1994
(51) Int. Cl.: F02K 1/82, G10K 11/16

(54) **Noise suppression liner for jet engines**

(30) Priority: 25.06.1993 US 83084
(71) Applicant: Nordam, Tulsa Oklahoma 74101-3365 (US)
(72) Inventor: Torkelson, Delbert W., Catoosa, Oklahoma 74015 (US); Modglin, Rodger L., Tulsa, Oklahoma 74133 (US)
(74) Representative: Wombwell, Francis

(57) **Abstract**

A tubular component such as an exhaust shroud is provided for use in a noise suppression system for an aircraft jet engine, the tubular component providing an outlet passage for jet engine produced exhaust gases having turbo-machinery produced sound energy superimposed thereon, the tubular component having an outer structural shell (44) with a tubular axis (32) and an acoustic liner supported within the structural shell formed of a tubular honeycomb metallic core, the honeycomb core being formed of thin metallic strips joined into a welded honeycomb arrangement of contiguous hexagonal cells (30). Each of the cells (30) has a longitudinal axis extending perpendicular to the shell tubular axis, each shell being of depth of at least one inch and of a cross-sectional size from wall-to-wall of about 3/8 to 1/2 inch.

## Description

### Background Of The Disclosure

This disclosure relates to a tubular component, such as an exhaust shroud, formed as a part of a noise suppression system for an aircraft jet engine. The noise produced by a jet engine is composed basically of: (a) a broadband energy related to the jet exhaust velocity, and (b) a narrowband tone energy produced by the turbo-machinery of the jet engine itself. If an exhaust shroud extending aft of the engine can be made to absorb and dissipate the low frequency energy produced by the jet engine, then a significant portion of the overall noise produced by an aircraft jet engine can be eliminated.

The use of a sound absorption material within an exhaust shroud is well known, as exemplified in the following United States Patents: 4,909,346 and 5,060,471.

A typical method of providing sound absorption material is the use of a honeycomb panel. Any sound absorption material used in a jet engine noise suppression system must be capable of withstanding the high temperatures encountered in the engine exhaust and thus must be made of metal, the preferred metal being stainless steel. Stainless steel honeycomb panels are typically produced with a honeycomb core with a planar material covering one or both sides. When using such planar honeycomb panels it is necessary to carve them into arcuate portions to fit inside the usual tubular exhaust shroud. The problem is that this method produces unequal individual cell sizes and cell alignments as measured with reference to the exhaust shroud tubular axis.

The use of honeycomb material that has irregular cell heights and cell alignments reduces the effectiveness of sound absorption. Absorption of a relatively low frequency band is required to effectively dissipate the sound energy tone produced by a jet engine. In other words, the sound absorption characteristics of previously used honeycomb sound absorption material has not maximized the noise reduction potential of a noise reduction system for use with a jet engine.

A method of manufacturing honeycomb core material that can be used in provided honeycomb sound absorptive material to practice the invention of this disclosure is described in United States Patent 5,064,493 issued November 12, 1991. Patent 5,064,493 is incorporated herein by reference.

### Summary Of The Invention

This invention pertains to a tubular component, such as an exhaust shroud used in a system for noise abatement of a jet aircraft engine. More particularly, the invention relies to an exhaust shroud used in a jet engine noise suppression system that provides a tubular component through which thrust producing jet engine exhaust gases pass. These jet engine gases inherently have a low frequency band of sound energy produced by the jet engine itself. If this low frequency sound produced energy is not absorbed in some way, it becomes a significant component of the overall noise generated by the engine. By providing a sound absorption material within the tubular component (such as an exhaust shroud) capable of absorbing the low frequency sound produced energy, the total resultant noise of the jet engine can be reduced.

The inclusion of sound absorption material in an exhaust shroud is a known technique as revealed such as in United States Patent Numbers 4,909,346 and 5,060,471. An effective and a preferred type of sound absorption material is a panel having a honeycomb core formed of thin metal strips bent and welded together to form contiguous honeycomb cells. Honeycomb panels are typically formed in flat sheets. A honeycomb core can be bent into a curve if the depth of the honeycomb core is relatively small, such as one inch or less. However, it has been learned that the most effective sound absorption system employing a honeycomb core material requires honeycomb cells of depth greater than one inch, as much as five or six inches, with a depth of two or three inches being typical. The previous efforts to provide honeycomb sound absorption material with significant depths, such as more than one inch, and particularly two or three inches, have employed flat honeycomb panels of this depth that are machined, after the panels are manufactured, to required circumferential contours to fit within a tubular exhaust shroud. This technique has met with less than complete success since such arrangement provides a honeycomb sound absorption material wherein the honeycomb cells are of an irregular configuration.

The present invention solves the problem of the known type of deep cell honeycomb sound absorption systems for use in exhaust shrouds by providing an acoustic liner formed of a honeycomb metallic core with contiguous hexagonal honeycomb cells arranged such that the cells each have a longitudinal axis that extends perpendicular to the tubular axis of the exhaust shroud. Each cell is symmetrical with respect to the other cells in the sound absorption system. The typical depth of the cells, which depends upon the sound frequency being absorbed, is two or three inches but in some applications may be five or six inches. The typical dimension of the cells measured from sidewall to sidewall at the outer circumferential periphery of the tubular sound absorption material is about 3/8 inch to 1/2 inch.

In a preferred arrangement of the invention, an acoustical liner is provided for support within a structural shell forming an exhaust shroud, the acoustical liner being formed with a honeycomb metal core of depth exceeding one inch and with hexagonal cell sizes of about 3/8 inch to 1 inch and including a perforated inner skin affixed to the honeycomb metal core. The perforated skin provides sound communication within the interior of the hexagonal cores of the honeycomb core but, at the same time, adds strength and rigidity to the acoustic liner and reduces the drag on jet exhaust gases passing through the exhaust shroud.

A better understanding of the invention will be had by reference to the following description of the preferred embodiment and the claims, taken in conjunction with the attached drawings.

### Description Of The Drawings

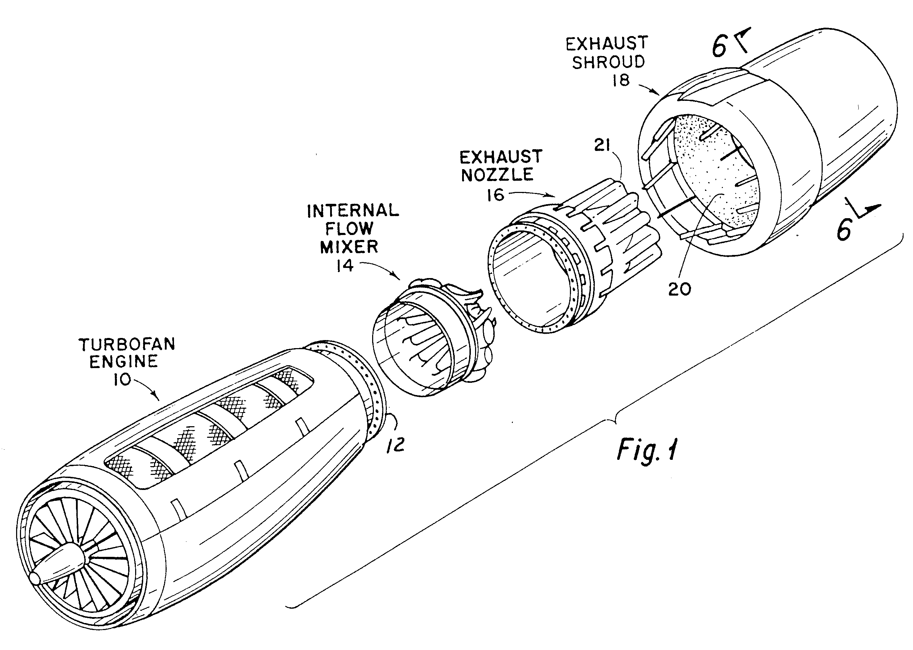

Figure 1 is an exploded view of a typical sound absorption system for use in conjunction with a turbofan aircraft engine, a major component of the system being the exhaust shroud component to which this invention pertains.

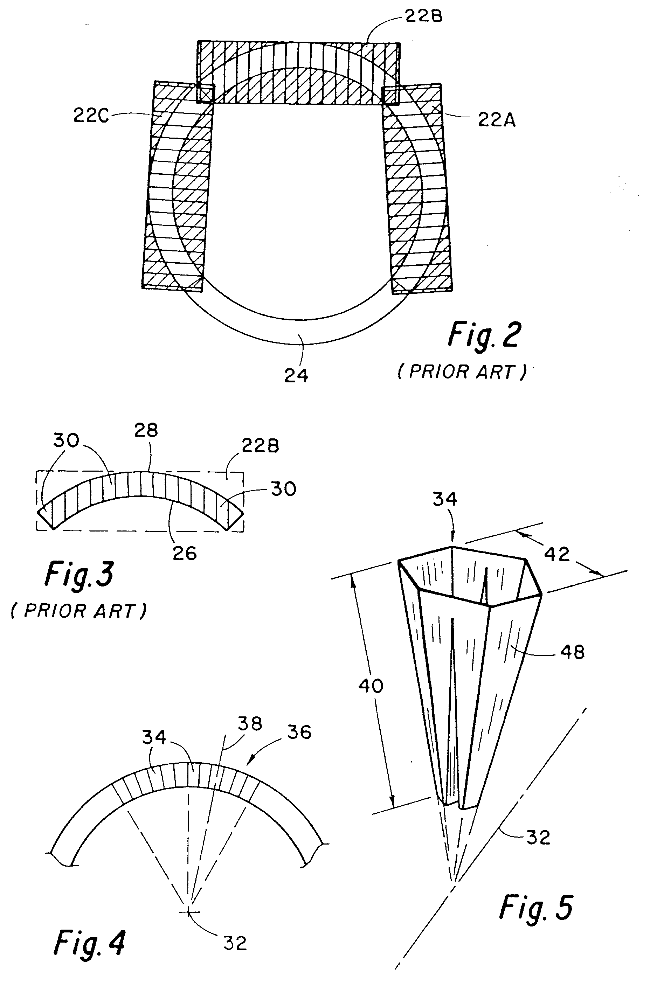

Figure 2 is an illustration of the prior art showing how relatively thick honeycomb panels, manufactured in the usual planar configuration, can be contoured and then assembled circumferentially in a process of manufacturing a tubular acoustic liner for use in an exhaust shroud.

Figure 3 is a fragmentary view of the prior art illustrated in Figure 2 showing a segment of a honeycomb core liner that can be used as an acoustic liner in an exhaust shroud of the type formed of a block of planar honeycomb core and showing that the configuration of the cells vary in length and shape.

Figure 4 is a partial cross-sectional view diagrammatically illustrating the cells of a honeycomb core acoustic liner arranged according to the principles of this invention wherein each of the cells of the acoustic liner has a longitudinal axis that is perpendicular to the exhaust shroud tubular axis.

Figure 5 is a diagrammatic illustration of a single cell of a honeycomb core acoustic liner illustrating the general appearance of a cell, however, in this illustration the dimensions are not in proportion, in that the illustration shows the width of the typical cell out of proportion to the typical length.

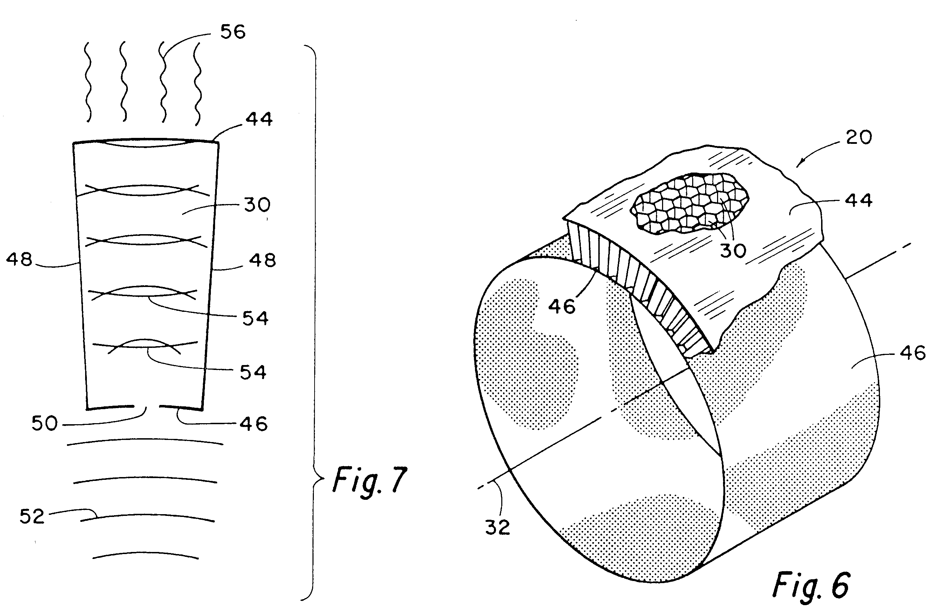

Figure 6 is a fragmentary view of an acoustic liner as employed in an exhaust shroud as taken along the line 6-6 of Figure 1. Figure 6 shows a short length section of an acoustic liner that employs a perforated inner skin and with the outer skin of the acoustic liner being broken away to show the configuration of the honeycomb cells.

Figure 7 is a diagrammatic illustration of a cross-section of a cell showing the opposed sidewalls and inner and outer skins, the inner skin being perforated to provide an entry for sound into the cell and showing sound waves as they travel within the cell.

### Description Of The Preferred Embodiment

Figure 1 is an illustration of one method of providing sound abatement for a turbofan aircraft engine. A typical turbofan engine is indicated by the numeral 10 having an exhaust end 12. The engine 10 functions by exhausting gases at exhaust end 12 at thrust producing velocities. Jet aircraft engines are extremely effective for producing thrust, however, the heated exhaust gases passing out the exhaust end produce high levels of noise, and the aircraft industry has been working to abate the noise produced by engines.

The noise produced by the exhaust gases passing out exhaust end 12 of a jet engine 10 are composed basically of, first, a low frequency energy relating to the exhaust gas velocity and, second, to a narrowband tone energy produced by the turbo-machinery of the jet engine itself. This invention is concerned primarily with the low frequency energy produced by the exhaust gas of the jet engines.

Figure 1 shows components that can be employed to help reduce the noise generated by an engine, including an internal flow mixer 14, an exhaust nozzle 16, and an exhaust shroud 18. The exhaust shroud is the final element through which the jet engine thrust producing gases pass before exiting to the atmosphere. Exhaust shroud 18 includes an acoustic liner 20 designed to absorb sound of the exhaust gases and to absorb the band tone energy produced by the turbo-machinery of jet engine 10. This invention is concerned entirely with the exhaust shroud 18 and particularly the acoustic liner 20 therein, the other components of Figure 1 being illustrated merely to indicate a typical environment in which an exhaust shroud having acoustic liner 20 therein can be employed.

The acoustic liner 20 can be formed in various ways, however, one method which has proven satisfactory and which is deemed to be the preferred method of providing acoustic liner 20 employs the use of a liner made with a honeycomb metallic core. The use of honeycomb panels is well known in the aircraft industry and the use of a honeycomb core has been previously employed in connection with exhaust shrouds in an effort to reduce noise. Figures 2 and 3 are illustrative of the prior art and show methods whereby flat panels of honeycomb core material can be employed in manufacturing a honeycomb core. Figure 2 shows three planar honeycomb deep cell panels 22A, 22B and 22C arranged in an outline 24 of a tubular acoustic liner as can be employed in liner 20 of Figure 1. The outline 24 superimposed over the planar honeycomb panels 22A, 22B and 22C illustrates how such panels must be shaped so that they can be assembled together in the formation of a tubular acoustic liner. Figure 2 shows only three of the planar honeycomb panels, it being apparent that more than these three are required to provide a complete circumferential tubular acoustic liner.

Figure 3 is another illustration of the prior art showing the honeycomb material that is obtained from shaping a planar honeycomb panel 22B. The panel includes an inner skin 26 and outer skin 28 with a honeycomb core therebetween defining a plurality of individual honeycomb cells 30. It is apparent from Figure 3 that an acoustic liner formed in this method provides honeycomb cells 30 that are irregular in configuration. The honeycomb cells vary in depth and cross-sectional shape and, therefore, the cells are inherently tuned to absorb different sound frequencies. It can be seen from Figures 2 and 3 that providing a honeycomb of this construction formed of planar honeycomb panels does not lend itself to the formation of an acoustic liner capable of effectively absorbing a narrow band of low frequency energy.

The improved acoustic liner of this invention is illustrated in Figures 4 through 7. The basic concept of the improved liner is the employment of a honeycomb core that is constructed so that each cell of the core is arranged radially about the tubular axis of a tubular component of a jet aircraft engine sound abatement system, such as the exhaust shroud 18 of Figure 1. A tubular axis of such tubular component is illustrated by the numeral 32 in Figures 4, 5 and 6. Each of the cells 34 of the improved acoustic liner 20 has an imaginary longitudinal axis 38 extending centrally within the interior of each cell and extending in the direction of the length thereof. As shown in Figure 4, the longitudinal axis of each cell 34 is arranged to be perpendicular to tubular axis 32 of the tubular exhaust shroud. In this way each cell 34 is uniform in its size, including its width and length, and in its orientation relative to the exhaust gases passing through the tubular exhaust shroud. The sound absorption characteristics of the liner can be carefully tuned to a frequency band which most effectively absorbs the low frequency tone energy produced by a jet engine.

Figure 5 is an isometric diagrammatic representation of a single cell 34. Cell 34 has hexagonal sidewalls and is contiguous to adjacent hexagonal cells. Cell 34 has a length 40 that is relatively long compared to its width. Length 40 is at least one inch or greater and as much as six inches, with the typical length being about two to three inches as required for effective sound absorption of the low frequency sound produced by the typical jet engine. The width of the cell as measured from opposed hexagonal sidewalls, indicated by the numeral 42, is typically 3/8 inch to 1 inch. Thus, the cells are relatively small in cross-section compared to their length 40.

Manufacturing honeycomb material for a curved configuration as required to provide a tubular core of a depth of one inch or more as required for the improved acoustic liner 36 can be accomplished utilizing the technique as illustrated in United States Patent No. 5,064,493 issued November 12, 1991 entitled "Method Of Producing Curved Honeycomb Core Material Having Crimps In One Edge".

Figure 6 illustrates a fragmentary section of the improved tubular acoustic liner 20 as would be employed in an exhaust shroud 18, such as taken along the line 6-6 of Figure 1. The tubular liner is formed of the honeycomb metallic core having the multiplicity of cells 30 therein with an outer skin 44 and an inner skin 46. The outer skin 44 is preferably impervious, or without openings therethrough, whereas inner skin 46 is preferably perforated as illustrated. The perforated inner skin 46 allows sound communication with the interior of each cell 30, while outer skin 44 provides a reflective surface within each cell.

Figure 7 is a cross-sectional diagrammatic illustration of a typical cell 30 showing inner skin 46, outer skin 44 and with cell sidewalls 48. The sidewalls 48 define cell 30, sidewalls 48 being hexagonally arranged as shown in Figures 5 and 6. As previously stated, inner skin 46 is perforated providing an opening 50 that communicates with the interior of cell 30. Sound waves characterized by the low frequency tone energy produced by the jet engines are indicated by the numeral 52. These sound waves pass through opening 50 into the interior of cell 30 where they are reflected by outer skin 44, the reflected waves being indicated by the numeral 54. The capture of the sound energy within the individual cells serve to dissipate the sound energy, and by the geometrical arrangement of the cells the dimensions can be selected to match the tonal energy to be absorbed. Thus, Figure 7 diagrammatically illustrates the manner in which low frequency tone energy produced sound waves 52 are effectively absorbed by cells 30 so that a substantial portion of the tone energy of wave 52 is absorbed, as indicated by the dissipated energy 56.

The claims and the specification describe the invention presented and the terms that are employed in the claims draw their meaning from the use of such terms in the specification. The same terms employed in the prior art may be broader in meaning than specifically employed herein. Whenever there is a question between the broader definition of such terms used in the prior art and the more specific use of the terms herein, the more specific meaning is meant.

While the invention has been described with a certain degree of particularity, it is manifest that many changes may be made in the details of construction and the arrangement of components without departing from the spirit and scope of this disclosure. It is understood that the invention is not limited to the embodiments set forth herein for purposes of exemplification, but is to be limited only by the scope of the attached claim or claims, including the full range of equivalency to which each element thereof is entitled.

## Claims

1. For use in a noise suppression system for a jet aircraft engine having a tubular component through which thrust producing jet engine exhaust gases pass, the gases having superimposed thereon turbo-machinery produced sound energy, the component comprising:
an outer structural shell having a tubular axis; and
an acoustic liner supported within said structural shell comprised, at least in part of a tubular honeycomb metallic core formed of a honeycomb of thin metal strips joined into a honeycomb arrangement of contiguous hexagonal cells, substantially all such cells each having a longitudinal axis extending substantially perpendicular to said shell tubular axis, each cell being of a depth measured parallel said cell longitudinal axis of at least 1 inch, each cell having an inner end in the direction of said structural shell tubular axis and an opposite, outer end, each cell being divergently tapered from said inner to said outer end.

2. A noise suppression component for jet aircraft engine noise suppression according to claim 1 wherein said liner is formed of hexagonally shaped cells, the sides thereof being spaced about 3/8 inch to 1/2 inch.

3. A noise suppression component for jet aircraft engine noise suppression according to claim 1 wherein said acoustic liner includes a perforated inner skin secured to said honeycomb metallic core.
